# EUROPEAN PATENT APPLICATION

(11) **EP 4 300 656 A2**
(43) Date of publication of application: **03.01.2024**
(21) Application number: 23151914.1
(22) Date of filing: 17.01.2023
(51) Int. Cl.: H01M 10/42

(54) **BATTERY MODULE, BATTERY CLUSTER, FIRE-FIGHTING EQUIPMENT AND ENCLOSED ENERGY STORAGE SYSTEM**

(30) Priority: 20.01.2022 CN 202220160020 U
(71) Applicant: Sungrow Energy Storage Technology Co., Ltd., Hefei, Anhui 230088 (CN)
(72) Inventor: HU, Bo, Hefei, 230088 (CN); HUANG, Shuqiang, Hefei, 230088 (CN); SU, Jinguo, Hefei, 230088 (CN)
(74) Representative: Rooney, John-Paul

(57) **Abstract**

A battery module, a battery cluster, fire-fighting equipment and an enclosed energy storage system are disclosed. The battery module includes a case, multiple electric cores and a fire-fighting spray nozzle, the case includes a top cover and a case body, the top cover is connected with the case body to form an accommodating cavity; the electric cores are spaced apart and arranged in the accommodating cavity; the fire-fighting spray nozzle is fitted on the case and is configured to spray fire-fighting agent on the multiple electric cores.

## Description

### FIELD

The present application relates to the technical field of energy storage, and in particular to a battery module, a battery cluster, fire-fighting equipment and an enclosed energy storage system.

### BACKGROUND

An energy storage system is composed of many energy storage batteries. After single energy storage electric cores are connected in series and in parallel to form an energy storage battery module, the energy storage battery modules are fitted on an energy storage battery rack to form a battery cluster, and the battery clusters are connected in parallel to form a battery energy storage system. During the charging and discharging, thermal runaway may occurs in the battery due to its own chemical reaction or external influence, which seriously affects the safety of the energy storage system. Therefore, fire-fighting is an important safety issue in the field of battery energy storage systems.

At present, a fire-fighting system used in the field is mainly designed for integrated fire-fighting: that is, when the preset fire-fighting conditions are met, the fire-fighting system can perform indiscriminate fire-fighting measures for the whole battery energy storage system to ensure fire-fighting safety, which greatly wastes the fire-fighting resources, causes the battery modules without faults to be polluted or even damaged by fire-fighting means (such as battery failure caused by water fire-fighting); in addition, the integrated fire-fighting is less targeted, and the intensity of fire-fighting for the parts that really need to take fire-fighting measures is insufficient, which has hidden dangers of failure or reburning.

### SUMMARY

A main object according to the present application is to provide a battery module, so as to perform targeted fire-extinguishing on the battery module and improve the fire-extinguishing efficiency.

In order to solve the above object, a battery module is provided according to the present application, which includes:
a case, including a top cover and a case body, in which the top cover is connected with the case body to form an accommodating cavity;
multiple electric cores, which are spaced apart in the accommodating cavity; and
a fire-fighting spray nozzle, which is fitted on the case and is configured to spray fire-fighting agent to the multiple electric cores.

In an embodiment, each electric core includes an explosion-proof valve, the explosion-proof valve is arranged toward the top cover, and the fire-fighting spray nozzle is fitted on the top cover to align the fire-fighting spray nozzle with the explosion-proof valve.

In an embodiment, the case body is enclosed by a front panel, a rear panel and side plates, and at least one of the front panel and the rear panel is fitted with the fire-fighting spray nozzle.

In an embodiment, a plug is plugged at the fire-fighting spray nozzle, and the plug is made of low-melting-point heat-sensitive material.

A battery cluster is further provided according to the present application, which includes a battery rack and multiple battery modules as described above, the battery rack is formed with multiple fitting cavities, and each fitting cavity is configured to fix one battery module.

Fire-fighting equipment is further provided according to the present application, for fire-fighting of the battery cluster as described above, and the fire-fighting equipment includes a fire-fighting pipeline, a fire-fighting device and a controller;
the fire-fighting pipeline is configured to be fitted on the battery rack of the battery cluster and is connected with the fire-fighting spray nozzle of the battery cluster;
the fire-fighting device includes a fire-fighting agent storage module and a detection module, the fire-fighting agent storage module is in communication with the fire-fighting pipeline, and the detection module is fitted on the fire-fighting pipeline and is configured to detect whether an abnormality occurs in the fire-fighting pipeline;
the controller is configured to control the fire-fighting agent storage module to release the fire-fighting agent in case that the detection module detects that an abnormality occurs in the fire-fighting pipeline.

In an embodiment, the detection module is a pressure sensor;
and/or, the detection module is a flow sensor.

In an embodiment, the fire-fighting pipeline includes a trunk pipeline and multiple sub-pipelines, the trunk pipeline and multiple sub-pipelines is in communication with the multiple sub-pipelines; the trunk pipeline is fixedly connected with the fire-fighting agent storage module, the multiple sub-pipelines are arranged along the battery rack and are fixedly connected with each fire-fighting spray nozzle, and a branch pipeline is connected between the corresponding sub-pipeline and each fire-fighting spray nozzle.

In an embodiment, the fire-fighting agent storage module includes a gas fire-extinguishing agent bottle, a reburning inhibitor bottle and an electromagnetic valve group, and the controller controls the gas fire-extinguishing agent bottle to release gas fire-extinguishing agent and controls the reburning inhibitor bottle to release inhibitor by the electromagnetic valve group.

In an embodiment, the electromagnetic valve group includes a first electromagnetic valve and a second electromagnetic valve, one end of the first electromagnetic valve is in communication with the gas fire-extinguishing agent bottle, the other end of the first electromagnetic valve is in communication with the fire-fighting pipeline, one end of the second electromagnetic valve is in communication with the reburning inhibitor bottle, and the other end of the second electromagnetic valve is in communication with the fire-fighting pipeline.

In an embodiment, the fire-fighting equipment further includes multiple real-time monitoring devices and switch boxes, the multiple real-time monitoring devices are configured to monitor indexes of the battery modules in the battery cluster and transmit corresponding fire-fighting information, each real-time monitoring device includes a monitoring module and an information processing feedback module, the monitoring module is fitted on the battery module, and the information processing feedback module transmits a received signal to a battery management system in the switch box.

An enclosed energy storage system is further provided according to the present application, which includes the battery cluster as described above and the fire-fighting equipment as described above.

The fire-fighting spray nozzle is fitted on the battery module in the technical solution of the present application, so that the fire-fighting agent can be sprayed on the corresponding battery module through the fire-fighting spray nozzle, which improves the fire-extinguishing efficiency, avoids the spread of fire, and avoids the damage of the battery module in the normal state caused by indiscriminate spraying , that is, reduces the use of fire-extinguishing agent while improves the fire-extinguishing efficiency and reduces potential safety hazards.

### BRIEF DESCRIPTION OF THE DRAWINGS

For more clearly illustrating the technical solutions in the embodiments of the present application or the conventional technology, drawings referred to for describing the embodiments or the conventional technology will be briefly described hereinafter. Apparently, drawings in the following description are only some examples of the present application, and for the person skilled in the art, other drawings may be obtained based on the provided drawings without any creative efforts.
FIG. 1 is a schematic structural view of a battery module according to an embodiment of the present application viewed from a first perspective;
FIG. 2 is a schematic structural view of the battery module in FIG. 1 with a top cover and a protective plate removed;
FIG. 3 is a schematic structural view of the battery module viewed from a second perspective;
FIG. 4 is a schematic structural view showing an assembly of a battery cluster and fire-fighting equipment; and
FIG. 5 is a partially enlarged view of portion A in FIG. 4.

Reference numerals in the drawings are as follows:

| reference numerals | names | reference numerals | names |
|---|---|---|---|
| 10 | Battery module | 30 | Fire-fighting equipment |

| | | | |
|---|---|---|---|
| 101 | Case | 301 | Fire-fighting pipeline |
| 100a | Top cover | 301a | Trunk pipeline |
| 100b | Case body | 301b | Sub-pipeline |
| 12 | Front panel | 301c | Branch pipeline |
| 13 | Rear panel | 302 | Fire-fighting agent storage module |
| 14 | Side plate | 302a | Gas fire-extinguishing agent bottle |
| 14a | Heat dissipation port | 302b | Reburning inhibitor bottle |
| 15 | Protective plate | 302c | Electromagnetic valve group |
| 102 | Fire-fighting spray nozzle | 32a | First electromagnetic valve |
| 103 | Air-cooling device | 32b | Second electromagnetic valve |
| 104 | Electric core | 303 | Detection module |
| 104a | Explosion-proof valve | 304 | Real-time monitoring module |
| 20 | Battery cluster | 304a | Monitoring module |
| 201 | Battery rack | 304b | Information processing feedback module |
| | | 305 | Switch case body |

The realization of the objects, functional characteristics and advantages of the present application will be further described in conjunction with the embodiments and with reference to the drawings.

### DETAILED DESCRIPTION OF EMBODIMENTS

The technical solutions in the embodiments of the present application will be described clearly and completely as follows in conjunction with the drawings in the embodiments of the present application. It is apparent that the described embodiments are only a part of the embodiments according to the present application, rather than all of the embodiments. Based on the embodiments of the present application, all other embodiments obtained by those having ordinary skill in the art without creative work shall fall within the protection scope of the present application.

In the description of the present application, it should be pointed out that, terms "connect" and "fix" should be understood broadly, unless otherwise specifically defined. For example, it can be fixedly connected or detachably connected or integrally connected; it can be mechanically connected or electrically connected; it can be directly connected or indirectly connected through intermediate media, or inner parts of two components are in communication with each other, or the interaction between the two components, unless otherwise explicitly defined. For those skilled in the art, the specific meaning of the above terms in the present application may be understood in the light of specific circumstances.

In addition, the descriptions of "first" and "second" in the present application are only used for descriptive purposes, and cannot be understood as indicating or implying their relative importance, or implicitly indicating the number of indicated technical features. Therefore, the features defined with "first" and "second" can include at least one of the features explicitly or implicitly. In addition, the technical solutions between the various embodiments can be combined with each other, but they must be based on the realization by a person skilled in the art. When the combination of technical solutions is contradictory or cannot be realized, it should be considered that such a combination of technical solutions does not exist, and is not within the protection scope of the present application.

A battery module 10 is provided according to the present application.

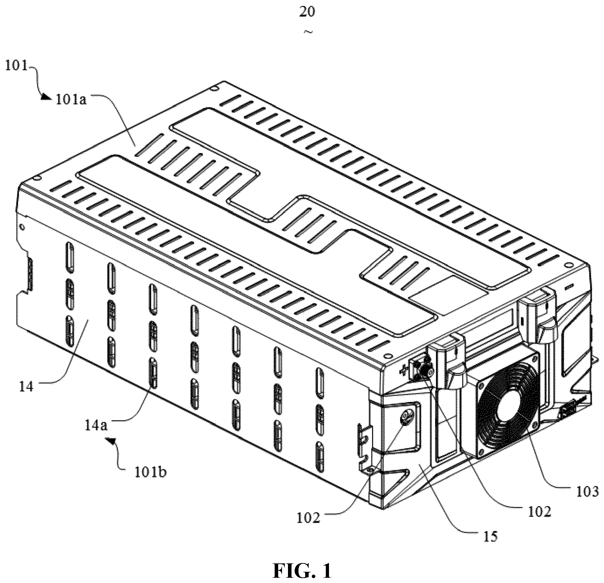

Referring to FIGS. 1 to 3, in an embodiment of the present application, the battery module 10 includes a case 101, multiple electric cores 104 and a fire-fighting spray nozzle 102, the case 101 includes a top cover 101a and a case body 100b, the top cover 100a is connected with the case body 101b to form an accommodating cavity; the multiple electric cores 104 are spaced apart and arranged in the accommodating cavity; and the fire-fighting spray nozzle 102 is fitted on the case 101 and is configured to spray fire-fighting agent to the multiple electric cores 104. It can be understood that each battery module 10 can be fitted with one fire-fighting spray nozzle 102, or each battery module 10 can be provided with multiple fire-fighting spray nozzles 102, which is depending on the situation, which is not limited herein; by fitting the fire-fighting spray nozzle 102 on the battery module 10, in case that an abnormal condition such as thermal runaway occurs in the electric core 104 in the battery module 10, that is, at the early stage of the fire, the fire-extinguishing agent can be sprayed on the electric core 104 in the battery module 10 to ensure the timeliness and accuracy of fire-extinguishing, which avoids the spread of fire, prevent indiscriminate spraying on other battery modules 10 in the normal state adjacent to the battery module 10 from resulting in the damage of the battery module 10 in the normal state and potential safety hazards, and reduces the waste of fire-fighting resources.

The fire-fighting spray nozzle 102 is fitted on the battery module 10 in the technical solution of the present application, so that the fire-fighting agent can be sprayed on the corresponding battery module 10 through the fire-fighting spray nozzle 102, which improves the fire-extinguishing efficiency, avoids the spread of fire, and avoids the damage of the battery module 10 in the normal state caused by indiscriminate spraying , that is, reduces the use of fire-extinguishing agent while improves the fire-extinguishing efficiency and reduces potential safety hazards.

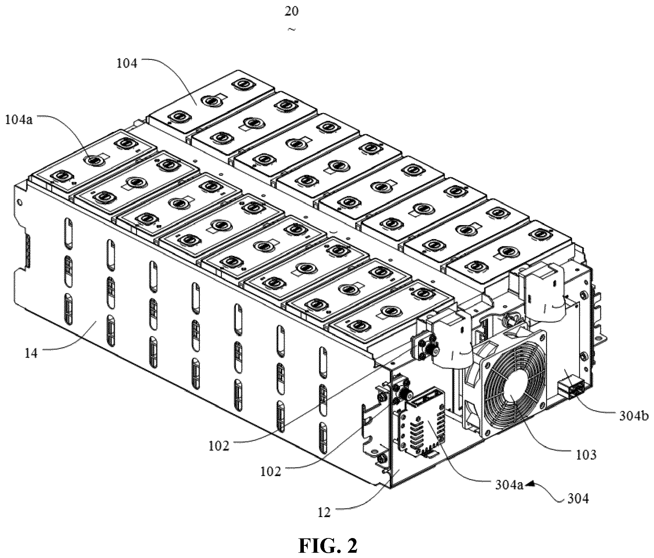

Specifically, referring to FIG. 1 and FIG. 2, in an embodiment, each electric core 104 includes an explosion-proof valve 104a, the explosion-proof valve 104a is arranged toward the top cover 100a, and the fire-fighting spray nozzle 102 is fitted on the top cover 100a to align the fire-fighting spray nozzle 102 with the explosion-proof valve 104a. When the pressure inside the electric core 104 is excessively high, the explosion-proof valve 104a at the top of the electric core 104 can be opened first, and the high-temperature and high-pressure electrolyte and combustible gas therein can be spouted from the explosion-proof valve 104a. Therefore, by fitting the fire-fighting spray nozzle 102 on the top cover 101a and aligning the fire-fighting spray nozzle 102 with the explosion-proof valve 104a, the fire-fighting agent can be sprayed on the explosion-proof valve 104a at the first time, and the fire can be extinguished quickly from the source of the fire, which improves the fire-extinguishing efficiency and fire-extinguishing effect.

Referring to FIGS. 1 to 3, in an embodiment, the case body 100b is enclosed by a front panel 12, a rear panel 13 and side plates 14, and at least one of the front panel 12 and the rear panel 13 is fitted with the fire-fighting spray nozzle 102. It can be understood that the fire-fighting spray nozzle 102 is fitted on the front panel 12 and/or the rear panel 13. In case that the thermal runaway occurs in the electric core in the case body 101b, the fire-fighting agent enters the case body 101b through the fire-fighting spray nozzle 102 and fills the case body 101b, so that the fire-fighting agent effectively stays in the space adjacent to the electric core 104 with thermal runway, that is, the fire-fighting agent surrounds the electric core 104, fully absorbs the energy released by the electric core 104 with thermal runaway, and reduces the accumulation and spread of heat, and thus prevent the spread of the thermal runaway.

In an embodiment, as shown in FIG. 2, the fire-fighting spray nozzle 102 is fitted on the front panel 12 and is located adjacent to the electric core 104, that is, the fire-fighting agent directly enters through the fire-fighting spray nozzle 102 and fills the case body 101b, and is sprayed on the surface of the electric core 104 in the battery module 10 with the thermal runaway, further fills the space adjacent to the electric core 104 with the thermal runaway, fully absorbs the energy released by the electric core 104 with the thermal runaway, and reduces the accumulation and spread of heat, and thus prevent the spread of the thermal runaway.

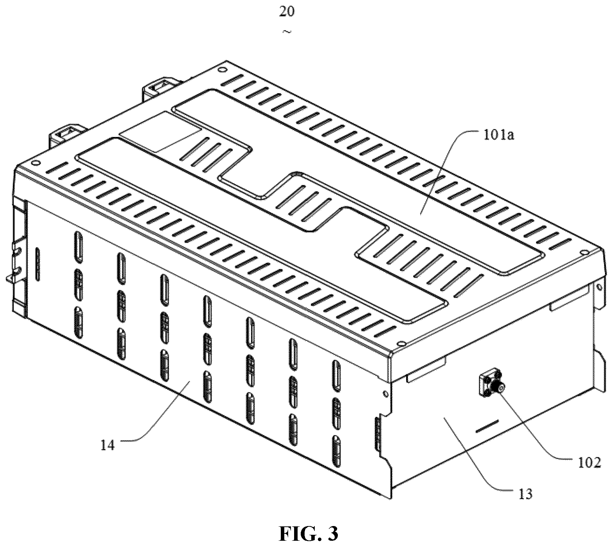

In an embodiment, as shown in FIG. 3, the fire-fighting spray nozzle 102 is fitted on the rear panel 13 and is located between two adjacent electric cores 104, that is, multiple rows of electric core groups are arranged in the battery module 10, and a flow passage is formed between two adjacent electric core groups. When the fire-fighting spray nozzle 102 is located between two adjacent electric core groups, that is, is located between two adjacent electric cores 104, the fire-fighting agent is sprayed through the fire-fighting spray nozzle 102 and simultaneously covers the electric cores 104 on both sides, which further accelerates the speed of the fire-fighting agent covering the electric cores 104, thus quickly avoids the spread of the thermal runaway.

In another embodiment, both the front panel 12 and the rear panel 13 are fitted with the fire-fighting spray nozzle 102, which further accelerates the speed of the fire-fighting agent covering the electric cores 104 and improves the fire-extinguishing efficiency.

The battery module 10 according to the present application is provided with a temperature control device, the temperature control device is an air-cooling device 103, in which the side plate 14 is provided with a heat dissipation port 14a. It can be understood that the electric cores 104 work and dissipate heat as the battery module 10 is in operation, so that the temperature in the case body 100b rises, and the air-cooling device cooperates with the heat dissipation port 104a to exchange the hot airflow in the battery module 10, that is, to discharge the airflow with the relatively high temperature from the case body 101b and reduce the temperature in the battery module 10. In case that the electric core 104 with thermal runaway appears in the battery module 10, taking the case that the air-cooling device 103 fitted on the front panel 12 and the fire-fighting spray nozzle 102 fitted on the rear panel 13 as an example, the air-cooling device 103 is oppositely arranged with the fire-fighting spray nozzle 102, that is, the air-cooling device 103 works normally so as to enable a flow direction of the fire-fighting agent to be consistent with an air direction, so that the fire-fighting agent can quickly cover the electric cores 104, which further accelerates the speed of the fire-fighting agent covering the electric cores 104, reduces the accumulation and spread of heat, and thus avoids the spread of the thermal runaway. Certainly, the present application is not limited thereto. In other embodiments, the temperature control device is a water-cooling device.

Specifically, the fire-fighting spray nozzle 102 is plugged by a plug, in an embodiment, the plug is covered outside the fire-fighting spray nozzle 102, the fire-fighting spray nozzle 102 is plugged by the plug, and the plug is made of low-melting-point heat-sensitive material. In another embodiment, a plug is filled inside the fire-fighting spray nozzle 102, and the plug is made of low-melting-point heat-sensitive material. In case that the thermal runaway occurs in the electric core 104 in the battery module 10, the plug fitted in the battery module 10 is easy to open the fire-fighting spray nozzle 102 due to high temperature melting deformation, so that the fire-fighting agent can be sprayed out of the fire-fighting spray nozzle 102, and then performs targeted fire-extinguishing to the battery module 10, which can lower the use rate of the fire-fighting agent while the fire-extinguishing efficiency is improved, and avoid the failure of the device that controls the plug, resulting in the fire spray nozzle 102 of failing to spray the fire-fighting agent and affecting the fire-fighting efficiency. Specifically, the deformation includes at least one of melting, softening or embrittlement, and the heat-sensitive material can be any of fusible alloy, memory alloy, thermoplastic resin, etc., so as to select the appropriate type of the heat-sensitive material according to the different needs of specific application scenarios.

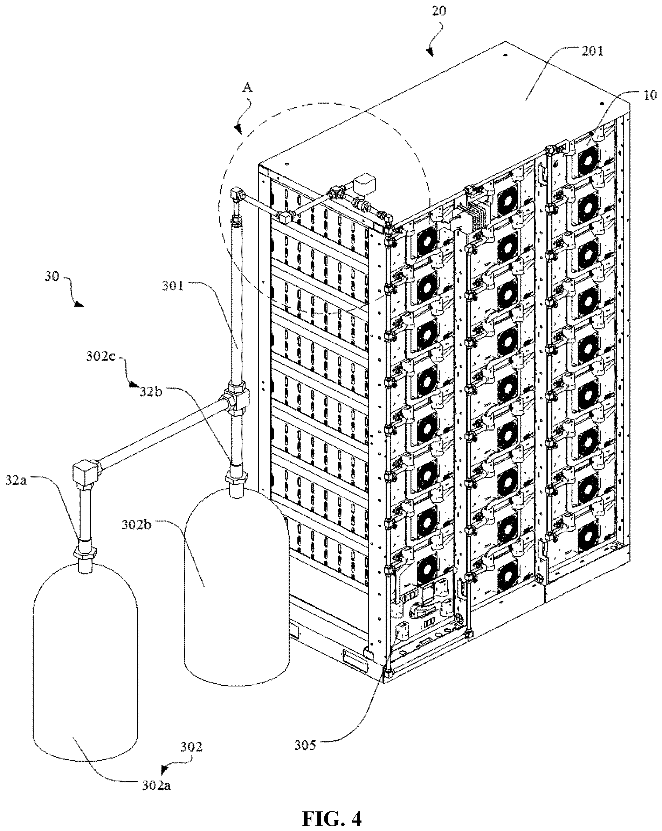

A battery cluster 20 is further provided according to the present application, which includes a battery rack 201 and multiple battery modules 10, and the specific structure of the battery modules 10 can refer to the above embodiments. Since the battery cluster 20 adopts all the technical solutions of all the above embodiments, it has at least all the beneficial effects brought by the technical solutions of the above embodiments, which is not described in detail herein. As shown in FIG. 4, the battery rack 201 is formed with multiple fitting cavities, and each fitting cavity is configured to fix one battery module 10.

Fire-fighting equipment 30 is further provided according to the present application, for fire-fighting of the battery cluster 20 as described above, and the fire-fighting equipment 30 includes a fire-fighting pipeline 301, a fire-fighting device and a controller; the fire-fighting pipeline 301 is configured to be fitted on the battery rack 201 of the battery cluster 20 and is connected with the fire-fighting spray nozzle 102 of the battery cluster 20; the fire-fighting device includes a fire-fighting agent storage module 302 and a detection module 303, the fire-fighting agent storage module 302 is in communication with the fire-fighting pipeline 301, and the detection module 303 is fitted on the fire-fighting pipeline 301 and is configured to detect whether an abnormality occurs in the fire-fighting pipeline 301; the controller is configured to control the fire-fighting agent storage module 302 to release the fire-fighting agent in case that the detection module detects that an abnormality occurs in the fire-fighting pipeline 301. Such arrangement can enable the targeted fire-extinguishing to be performed on the battery cluster 20 in time at the early stage of fire, that is, the targeted fire-extinguishing is performed at the early stage of fire through the fire-fighting spray nozzle 102 on the battery cluster 20, which further avoids the spread of fire and improves the use safety of the battery cluster 20.

Specifically, as shown in FIG. 4, the battery cluster 20 includes the battery rack 201 and the multiple battery modules 10 fitted on the battery rack 201, and each battery module 10 is provided with at least one fire-fighting spray nozzle 102, which facilitates of targeted fire-fighting on the battery modules 10 with thermal runaway. The fire-fighting equipment 30 is arranged for the battery cluster 20 to ensure that the corresponding fire-fighting resource, such as the fire-fighting agent, is supplied to the fire-fighting spray nozzle 102 at the first time, which improves the fire-extinguishing efficiency. Further, the fire-fighting equipment 30 includes the fire-fighting pipeline 301, the fire-fighting device and the controller, and the fire-fighting pipeline 301 is fixed on the battery rack 201 and is connected with each fire-fighting spray nozzle 102, which is beneficial for the fire-fighting agent storage module 302 in the fire-fighting device to deliver the fire-fighting agent to each fire-fighting spray nozzle 102 through the fire-fighting pipeline 301, so as to achieve targeted fire-fighting for one/several battery modules 10 of the battery cluster 20 with thermal runaway, and improve the use safety of the battery cluster 20.

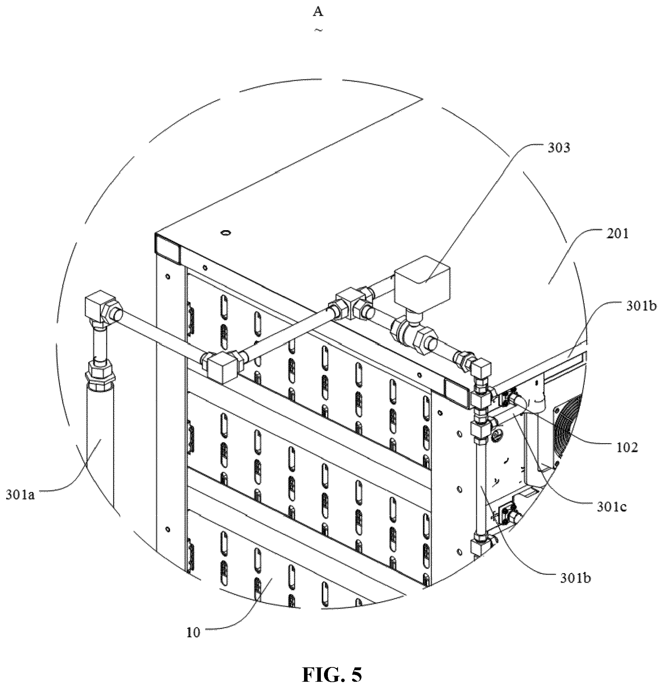

Referring to FIG. 5, the fire-fighting pipeline 301 is fitted with the detection module 303, and the detection module 303 is configured to detect whether an abnormality occurs in the fire-fighting pipeline 301. It can be understood that the fire-fighting agent is generally stored in the fire-fighting pipeline 301 at a low pressure, when the plug in the fire-fighting spray nozzle 102 at a rear end of the fire-fighting pipeline 301 senses that a real-time temperature is excessively high and the plug is deformed, that is, when the fire-fighting spray nozzle 102 is opened, the fire-fighting agent located in the fire-fighting pipeline 301 flows out and changes an internal environment of the fire-fighting pipeline 301, in that case the detection module 303 detects the abnormality and transmits the corresponding signal to the controller, and the controller controls the fire-fighting agent storage module 302 to release more fire-fighting agent, so as to further extinguish the fire on the battery module 10, and improve the reaction speed of the fire-extinguishing, thus improving the timeliness and accuracy of the fire-extinguishing, and completely solve the problem of fire hazards.

The form of fire-fighting agent is at least one of gas, liquid, gas-liquid mixture, solid-liquid mixture or gas-solid-liquid mixture. According to the form of the fire-fighting agent located in the fire-fighting pipe 301, the detection module 303 can be selected as a pressure sensor or a flow sensor, or a pressure sensor and a flow sensor simultaneously, or other detection devices that can detect whether an abnormality occurs in the fire-fighting pipe 301.

Referring to FIG. 4 and FIG. 5, in an embodiment, the fire-fighting pipeline 301 includes a trunk pipeline 301a and multiple sub-pipelines 301b, the trunk pipeline 301a is in communication with the multiple sub-pipelines 301b; the trunk pipeline 301a is fixedly connected with the fire-fighting agent storage module 302, the multiple sub-pipelines 301b are arranged along the battery rack 201 and are fixedly connected with each fire-fighting spray nozzle 102, and a branch pipeline 301c is connected between the corresponding sub-pipeline 301b and each fire-fighting spray nozzle 102. It can be understood that multiple branch pipelines 301c corresponding to the battery modules 10 are spaced apart and arranged on one sub-pipeline 301b, and the trunk pipeline 301a is in communication with the fire-fighting agent storage module 302 and the sub-pipelines 301b respectively, so that each battery module 10 on the battery rack 201 is in communication with the trunk pipeline 301a through the corresponding sub-pipeline 301b, which ensures that the fire-fighting agent in the fire-fighting agent storage module 302 can flow to the corresponding fire-fighting spray nozzle 102 along the paths of the trunk pipeline 301a, the sub-pipeline 301b and the branch pipeline 301c in order to extinguish the fire on the corresponding battery module 10.

Specifically, the branch pipeline 301c is a hose and is made of soft material, which facilitates of distribution and maintenance and of connecting the battery modules 10 at different positions, thus optimizing the layout design of the fire-fighting pipe 301 and improving the working stability of the fire-fighting equipment 30. The trunk pipeline 301a is a rigid pipeline such as a steel pipeline, which facilitates of fixing the fire-fighting pipe 301 to the battery rack 201 and improves the smoothness of the flow of the fire-fighting agent in the fire-fighting pipe 301. The present application is not limited thereto, in other embodiments, the branch pipelines 301c and the trunk pipeline 301a are rigid pipelines such as steel pipelines, which facilitates of fitting the fire-fighting pipe 301 and improve the smoothness of the flow of the fire-fighting agent in the fire-fighting pipe 301.

According to the comprehensive cost, fitting convenience and maintenance convenience, the detection module 303 can be fitted on the trunk pipeline 301a; certainly, the detection modules 303 can be fitted on the sub-pipelines 301b. In case that the detection modules 303 are fitted on the sub-pipelines 301b, the relative cost is higher, but the accuracy is also higher, that is, it can determine which plug/plugs at the fire-fighting spray nozzle 102 corresponding to the battery module 10/battery modules 10 is/are deformed by determining the abnormal information transmitted by the detection module 303 at different locations, so that targeted fire-fighting and targeted maintenance measures can be performed.

Referring to FIG. 4, in an embodiment, the fire-fighting agent storage module 302 includes a gas fire-extinguishing agent bottle 302a, a reburning inhibitor bottle 302b and an electromagnetic valve group 302c, and the controller controls the gas fire-extinguishing agent bottle 302a to release gas fire-extinguishing agent and controls the reburning inhibitor bottle 302b to release inhibitor by the electromagnetic valve group 302c. Specifically, the electromagnetic valve group 302c includes a first electromagnetic valve 32a and a second electromagnetic valve 32b, one end of the first electromagnetic valve 32a is in communication with the gas fire-extinguishing agent bottle 302a, the other end of the first electromagnetic valve 302a is in communication with the fire-fighting pipeline 301, and one end of the second electromagnetic valve 32b is in communication with the reburning inhibitor bottle 302b, and the other end of the second electromagnetic valve 32b is in communication with the fire-fighting pipeline 301. It can be understood that the first electromagnetic valve 32a is used as a switch of the gas fire-extinguishing agent bottle 302a and is configured to open the gas fire-extinguishing agent bottle 302a according to a first control instruction sent by the controller, the second electromagnetic valve is used as a switch of the reburning inhibitor bottle 302b and is configured to open the reburning inhibitor bottle 302b according to a second control instruction sent by the controller, that is, in case that the thermal runaway occurs in the electric core 104, the real-time temperature around the corresponding battery module 10 rises, the controller receives the abnormal signal and sends out the first control instruction and the second control instruction successively, that is, the gas fire-extinguishing agent first cools down the electric core 104 and extinguishes the open fire, then the electric core 104 is immersed by the reburning inhibitor, so that the electric core 104 is completely isolated from the air and absorbs the heat generated by the electric core 104, which ensures that the electric core 104 does not reburn for a long time, realizes the effective fire-extinguishing and long-term suppression of the fire on the electric core 104, and completely solves the problem of fire hazards.

Referring to FIG. 2 and FIG. 4, in an embodiment, the fire-fighting equipment 30 further includes multiple real-time monitoring devices 304 and switch boxes 305, the multiple real-time monitoring devices 304 are configured to monitor various indexes of the battery modules 10 in the battery cluster 20 and transmit corresponding fire-fighting information, each real-time monitoring device 304 includes a monitoring module 304a and an information processing feedback module 304b, the monitoring module 304a is fitted on the battery module 10, and the information processing feedback module 304b transmits a received signal to a battery management system in the switch boxes 305.

In the present application, each battery cluster 20 is provided with one switch box 305, and one real-time monitoring device 304 is configured to monitor the indexes of one battery module 10 and transmit the corresponding fire-fighting information, that is, the monitoring module 304a in each real-time monitoring device 304 detects the corresponding fire-fighting information of the corresponding battery module 10 and transmits the fire-fighting information to the information processing feedback module 304b, the information processing feedback module 304b processes the obtained fire-fighting information and transmits it to the battery management system in the switch box 305, and the battery management system further compares the received fire-fighting information to determine whether to take corresponding fire-fighting measures for the battery module 10 or the battery cluster 20 and send corresponding alarm prompts, so that the fire-extinguishing is performed on the battery module 10 with thermal runaway in time while the indiscriminate spraying on the battery modules 10 in a normal state can be avoided, which improves the accuracy of information transmission and the timeliness and specificity of the fire-extinguishing.

The real-time monitoring device 304 can be fitted at a position where fire is easy to occur, such as a position with large heat generation, a position with poor heat dissipation conditions, or a position where the fire-fighting information of the overall battery core 104 can be easily collected, as shown in FIG.2, a position near the air-cooling device 103 of the battery module 10, that is, a position of an air duct outlet, so that the working state of the battery module 10 can be quickly and accurately detected and the corresponding fire-fighting information can be transmitted; the fire-fighting information generally includes temperature information, smoke information, combustible gas information or electrical information, that is, whether to perform fire-extinguishing is determined by these information, so as to avoid the spread of fire. In order to avoid the damage of the real-time monitoring device 304, the front panel 12 further includes a protective plate 15.

An enclosed energy storage system is further provided according to the present application, which includes a battery cluster 20 and fire-fighting equipment 30, and the specific structures of the battery cluster 20 and the fire-fighting equipment 30 can refer to the above embodiments. Since the battery cluster 20 and the fire-fighting equipment 30 adopt all the technical solutions of all the above embodiments, the enclosed energy storage system has at least all the beneficial effects brought by the technical solutions of the above embodiments, which is not described in detail herein.

The above are only preferred embodiments of the present application, and do not limit the scope of the present application. Under the concept of the present application, any equivalent structural transformation made by using the content of description and drawings of the present application, or direct/indirect applications in other related technical fields, are included in the protection scope of the present application.

## Claims

1. A battery module, comprising:
a case, comprising a top cover and a case body, wherein the top cover is connected with the case body to form an accommodating cavity;
a plurality of electric cores, which are spaced apart and arranged in the accommodating cavity; and
a fire-fighting spray nozzle, which is fitted on the case and is configured to spray fire-fighting agent to the plurality of electric cores.

2. The battery module according to claim 1, wherein each electric core comprises an explosion-proof valve, the explosion-proof valve is arranged toward the top cover, and the fire-fighting spray nozzle is fitted on the top cover to align the fire-fighting spray nozzle with the explosion-proof valve.

3. The battery module according to claim 1, wherein the case body is enclosed by a front panel, a rear panel and side plates, and at least one of the front panel and the rear panel is fitted with the fire-fighting spray nozzle.

4. The battery module according to claim 1, wherein a plug is plugged at the fire-fighting spray nozzle, and the plug is made of low-melting-point heat-sensitive material.

5. A battery cluster, comprising a battery rack and a plurality of battery modules according to any one of claims 1 to 4, wherein the battery rack is formed with a plurality of fitting cavities, and each fitting cavity is configured to fix one battery module.

6. Fire-fighting equipment, for fire-fighting of the battery cluster according to claim 5, wherein the fire-fighting device comprises a fire-fighting pipeline, a fire-fighting device and a controller; the fire-fighting pipeline is configured to be fitted on the battery rack of the battery cluster and is connected with the fire-fighting spray nozzle of the battery cluster;
the fire-fighting device comprises a fire-fighting agent storage module and a detection module, the fire-fighting agent storage module is in communication with the fire-fighting pipeline, and the detection module is fitted on the fire-fighting pipeline and is configured to detect whether an abnormality occurs in the fire-fighting pipeline;
the controller is configured to control the fire-fighting agent storage module to release the fire-fighting agent in case that the detection module detects that an abnormality occurs in the fire-fighting pipeline.

7. The fire-fighting equipment according to claim 6, wherein the detection module is a pressure sensor;
and/or, the detection module is a flow sensor.

8. The fire-fighting equipment according to claim 6, wherein the fire-fighting pipeline comprises a trunk pipeline and a plurality of sub-pipelines, the trunk pipeline is in communication with the plurality of sub-pipelines; the trunk pipeline is fixedly connected with the fire-fighting agent storage module, the plurality of sub-pipelines are arranged along the battery rack and are fixedly connected with each fire-fighting spray nozzle, and a branch pipeline is connected between the corresponding sub-pipeline and each fire-fighting spray nozzle.

9. The fire-fighting equipment according to claim 6, wherein the fire-fighting agent storage module comprises a gas fire-extinguishing agent bottle, a reburning inhibitor bottle and an electromagnetic valve group, and the controller controls the gas fire-extinguishing agent bottle to release gas fire-extinguishing agent and controls the reburning inhibitor bottle to release inhibitor by the electromagnetic valve group.

10. The fire-fighting equipment according to claim 9, wherein the electromagnetic valve group comprises a first electromagnetic valve and a second electromagnetic valve, one end of the first electromagnetic valve is in communication with the gas fire-extinguishing agent bottle, the other end of the first electromagnetic valve is in communication with the fire-fighting pipeline, one end of the second electromagnetic valve is in communication with the reburning inhibitor bottle, and the other end of the second electromagnetic valve is in communication with the fire-fighting pipeline.

11. The fire-fighting equipment according to claim 6, wherein the fire-fighting equipment further comprises a plurality of real-time monitoring devices and switch boxes, the plurality of real-time monitoring devices are configured to monitor indexes of the battery modules in the battery cluster and transmit corresponding fire-fighting information, each real-time monitoring device comprises a monitoring module and an information processing feedback module, the monitoring module is fitted on the battery module, and the information processing feedback module transmits a received signal to a battery management system in the corresponding switch box.

12. An enclosed energy storage system, comprising the battery cluster according to claim 5 and the fire-fighting equipment according to any one of claims 6 to 11.
